# EUROPÄISCHE PATENTSCHRIFT

(11) **EP 3 787 135 B1**
(45) Veröffentlichungstag und Bekanntmachung des Hinweises auf die Patenterteilung: **07.05.2025**
(21) Anmeldenummer: 19194477.6
(22) Anmeldetag: 29.08.2019
(51) Int. Cl.: H02B 1/44, H02B 1/38, H02B 1/06, E05D 1/04

(54) **VERTEILERSCHRANK**
DISTRIBUTION CABINET
ARMOIRE DE DISTRIBUTION

(43) Veröffentlichungstag der Anmeldung: 03.03.2021
(73) Patentinhaber: Hager Electro GmbH & Co. KG, 66440 Blieskastel (DE)
(72) Erfinder: AMENDOLA, Ettore, 57600 OETING (FR); MONZON, Juan, 66125 DUDWEILER (DE); TORNOS, Sergi, 08480 BARCELONA (ES)
(74) Vertreter: Cabinet Nuss

(56) Entgegenhaltungen:
- EP-A2- 0 253 756
- CN-A- 109 252 769
- DE-B3- 102018 112 708
- FR-A- 1 500 322
- GB-A- 2 229 222
- KR-Y1- 200 442 754
- US-A- 3 346 308
- US-A- 5 358 135

## Beschreibung

Die Erfindung betrifft einen Verteilerschrank, insbesondere einen Verteilerschrank, der zum Einbau in eine Hohlwand und/oder für einen Unterputz-Einbau geeignet ist.

Verteilerschränke sind aus dem Stand der Technik bekannt. Ein Verteilerschrank ist in der Regel ein Kasten, der mittels einer Tür verschließbar ist und in welchem Sicherung- und Schaltelemente zur Verteilung von elektrischer Energie im Bereich eines Niederspannungsnetzes untergebracht sind.

Die Druckschrift CN 109 252 769 A zeigt ein Gehäuse mit einem um eine Schwenkachse herum aufklappbaren Deckel. Die Schwenkachse wird während des Öffnens bzw. Schließens bogenförmig geführt.

Die Druckschriften FR 1 500 322 A und DE 10 2018 112708 B3 offenbaren Scharnieranordnungen, die Öffnungswinkel von 180° durch Verwendung von Doppelscharnieren ermöglichen, bei denen ein Scharnier an dem Grundkörper und das andere Scharnier an dem Türblatt montiert ist, wobei keine direkte Verbindung zwischen dem Türblatt und dem Grundkörper besteht.

Es ist die Aufgabe der vorliegenden Erfindung, einen Verteilerschrank vorzuschlagen, bei welchem die Installation der darin anzuordnenden elektrischen Elemente erleichtert ist. Es ist eine weitere Aufgabe der vorliegenden Erfindung, einen Verteilerschrank bereitzustellen, dessen Tür sich in einfacher Weise öffnen lässt ohne mit dem Rahmen oder mit in dem Verteilerschrank angeordneten Geräten in Berührung zu gelangen.

Erfindungsgemäß wird diese Aufgabe durch einen Verteilerschrank nach Anspruch 1 gelöst.

Der Verteilerschrank ist mit einem Grundkörper, einem Türblatt und einem Scharnierkörper versehen. Das Türblatt umfasst wenigstens einen Vorsprung, der sich im Wesentlichen parallel zur Schwenkachse erstreckt. Der Grundkörper umfasst wenigstens eine im Wesentlichen ellipsenbogenförmige Führungsfläche, entlang welcher der Vorsprung geeignet ist, während eines Öffnungs- oder Schließungsvorgangs des Türblatts zu gleiten.

Der Scharnierkörper umfasst erfindungsgemäß wenigstens ein Scharnierelement, das entlang einer Translationsachse beweglich in dem Grundkörper gehalten ist und wenigstens eine Schwenkachse aufweist, die mit dem Türblatt verbunden ist. Das Türblatt ist um die Schwenkachse herum schwenkbar.

Durch den erfindungsgemäßen Verteilerschrank wird die Installation der darin anzuordnenden Geräte erleichtert. Das Türblatt des erfindungsgemäßen Verteilerschranks lässt sich in einfacher Weise derart weit genug öffnen, dass die Installation der darin anzuordnenden Geräte erleichtert ist.

In einer Ausgestaltung erstreckt sich die Schwenkachse im Wesentlichen orthogonal zur Translationsachse.

In einer Ausgestaltung ist die Schwenkachse durch wenigstens einen Stift gebildet, wobei das Türblatt eine Öffnung umfasst, in welcher der Stift aufgenommen ist.

Durch diese Ausgestaltung lässt sich der Scharnierkörper in einfacher und kostengünstiger Weise herstellen.

In einer Ausgestaltung ist in dem Grundkörper eine Aufnahme gebildet, in welcher das Scharnierelement entlang der Translationsachse beweglich gehalten ist, wobei die Aufnahme durch wenigstens eine sich im Wesentlichen parallel zur Translationsachse erstreckende Seitenwand begrenzt ist.

In einer Ausgestaltung umfasst das Scharnierelement einen Rastvorsprung, der das Scharnierelement formschlüssig in der Aufnahme hält.

Durch diese Ausgestaltung wird die Montage des Verteilerschranks und insbesondere die Anordnung des Scharnierelements im Grundkörper erleichtert.

In einer Ausgestaltung ist in der Seitenwand wenigstens eine Ausnehmung gebildet, in welcher der Stift in einer geschlossenen Stellung des Türblatts aufgenommen ist.

In einer weiteren Ausgestaltung umfasst das Scharnierelement wenigstens einen Federabschnitt und das Türblatt wenigstens eine Nut, wobei der Federabschnitt in einer intermediären Stellung des Türblatts in der Nut aufgenommen ist, um das Türblatt in der intermediären Stellung zu halten.

Vorzugsweise umfasst der Grundkörper eine Abdeckung, in welcher das Scharnierelement entlang der Translationsachse beweglich gehalten ist, wobei vorzugsweise die Aufnahme an in der Abdeckung gebildet ist.

Einzelheiten und weitere Vorteile des erfindungsgemäßen Verteilerschranks werden anhand des nachfolgend beschriebenen Ausführungsbeispiels erläutert. Dabei veranschaulichen im Einzelnen:
Figur 1: eine perspektivische Ansicht eines Verteilerschranks nach dem Ausführungsbeispiel;

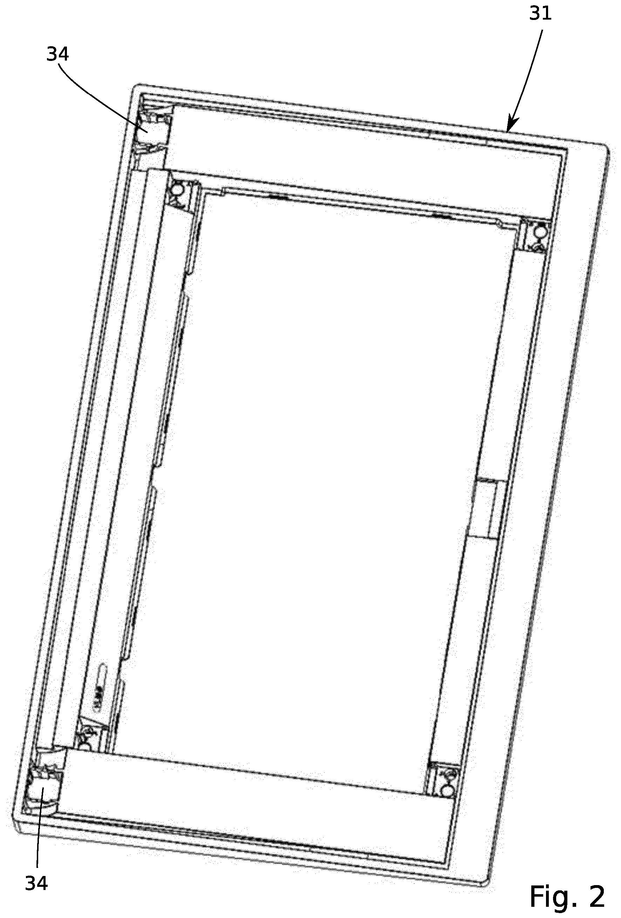

Figur 2: eine perspektivische Ansicht eines Grundkörpers des Verteilerschranks nach dem Ausführungsbeispiel;

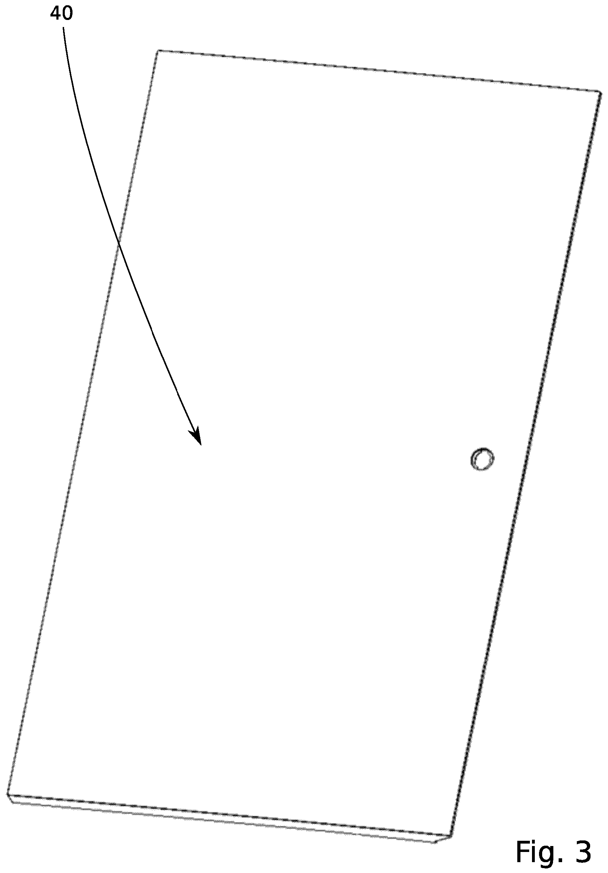

Figur 3: eine perspektivische Ansicht eines Türblatts des Verteilerschranks nach dem Ausführungsbeispiel;

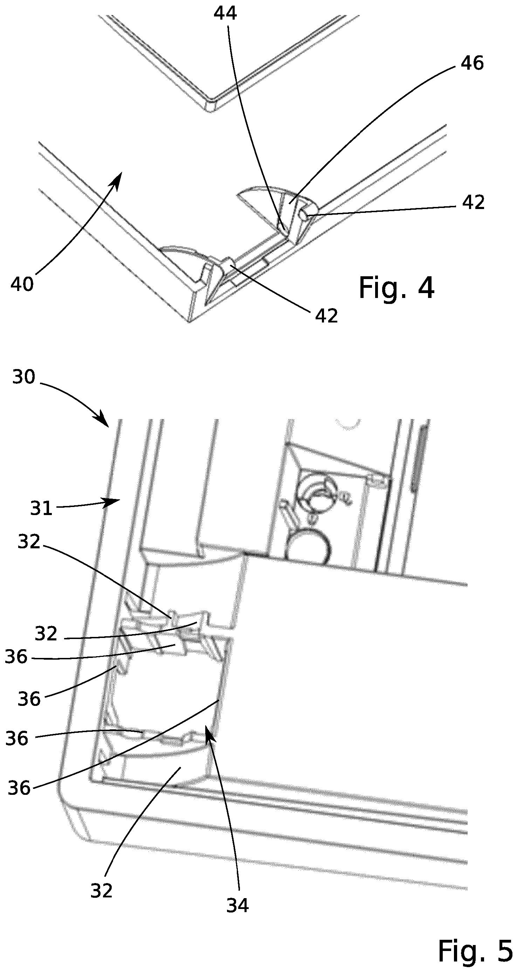

Figur 4: eine Detailansicht des Türblatts aus Figur 3;
Figur 5: eine Detailansicht des Grundkörpers aus Figur 2;
Figur 6: eine weitere Detailansicht des Grundkörpers aus Figur 2;

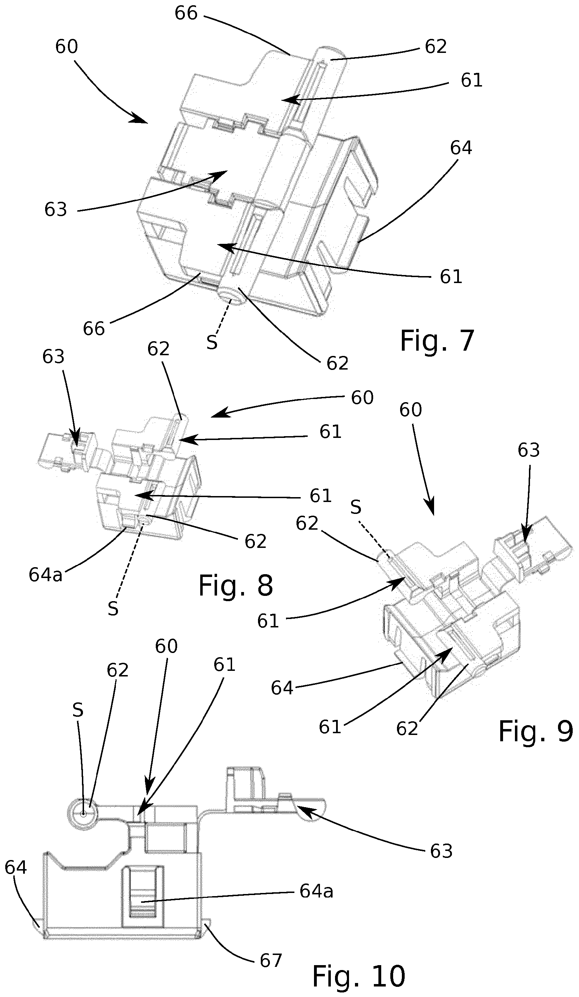

Figuren 7 bis 10: perspektivische Ansichten eines Scharnierelements eines Scharniers des Verteilerschranks nach dem Ausführungsbeispiel;
Figur 11: eine seitliche Schnittansicht des Verteilerschranks nach dem Ausführungsbeispiel, wobei das Türblatt eine geschlossene Stellung einnimmt;
Figur 12: eine seitliche Schnittansicht des Verteilerschranks nach dem Ausführungsbeispiel, wobei das Türblatt eine halbgeöffnete Stellung einnimmt;
Figur 13: eine Detailansicht des Verteilerschranks aus Figur 12;
Figur 14: eine seitliche Schnittansicht des Verteilerschranks nach dem Ausführungsbeispiel, wobei das Türblatt eine intermediäre Stellung einnimmt;
Figur 15: eine Detailansicht des Verteilerschranks aus Figur 14;
Figur 16: eine seitliche Schnittansicht des Verteilerschranks nach dem Ausführungsbeispiel, wobei das Türblatt eine geöffnete Stellung einnimmt;
Figur 17: eine Detailansicht des Verteilerschranks aus Figur 16; und
Figur 18: eine weitere Ansicht des Grundkörpers des Verteilerschranks nach dem Ausführungsbeispiel.

Die vorliegende Erfindung betrifft einen Verteilerschrank 20 mit einem Grundkörper 30, einem Türblatt 40 und einem Scharnierkörper 50. Der Scharnierkörper 50 umfasst wenigstens ein Scharnierelement 60, das entlang einer Translationsachse T beweglich in dem Grundkörper 30 gehalten ist und wenigstens eine Schwenkachse S aufweist, die mit dem Türblatt 40 verbunden ist. Das Türblatt 40 ist um die Schwenkachse S herum schwenkbar.

Der Verteilerschrank 20 nach dem Ausführungsbeispiel kann als Kasten ausgeführt sein, der mittels des Türblatts 40 verschließbar ist und in welchem beispielsweise Sicherung- und Schaltelemente zur Verteilung von elektrischer Energie im Bereich eines Niederspannungsnetzes untergebracht sind. Die Sicherung- und Schaltelemente können bei geöffnetem Türblatt 40 durch eine Schranköffnung hindurch für einen Installateur oder Benutzer zugänglich sein. Der Verteilerschrank 20 nach dem Ausführungsbeispiel kann zum Einbau in eine Hohlwand und/oder für einen Unterputz-Einbau geeignet sein.

Der Verteilerschrank 20 nach dem Ausführungsbeispiel weist einen aus zwei Scharnierelementen 60 zusammengesetzten Scharnierkörper 50 auf. Die Scharnierelemente 60 sind an gegenüberliegenden Seiten des Scharnierkörpers 50 angeordnet.

Die Schwenkachse S kann sich im Wesentlichen orthogonal zur Translationsachse T erstrecken.

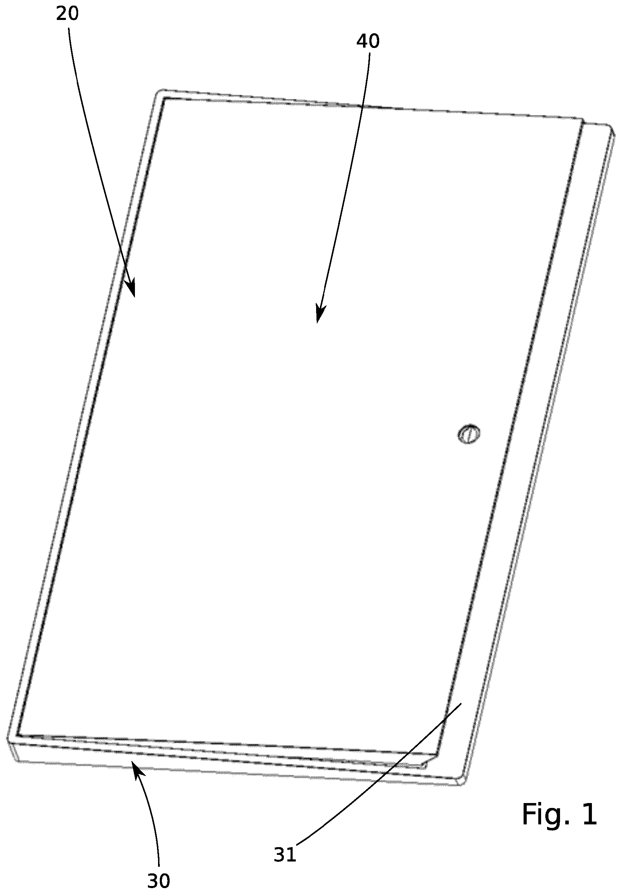

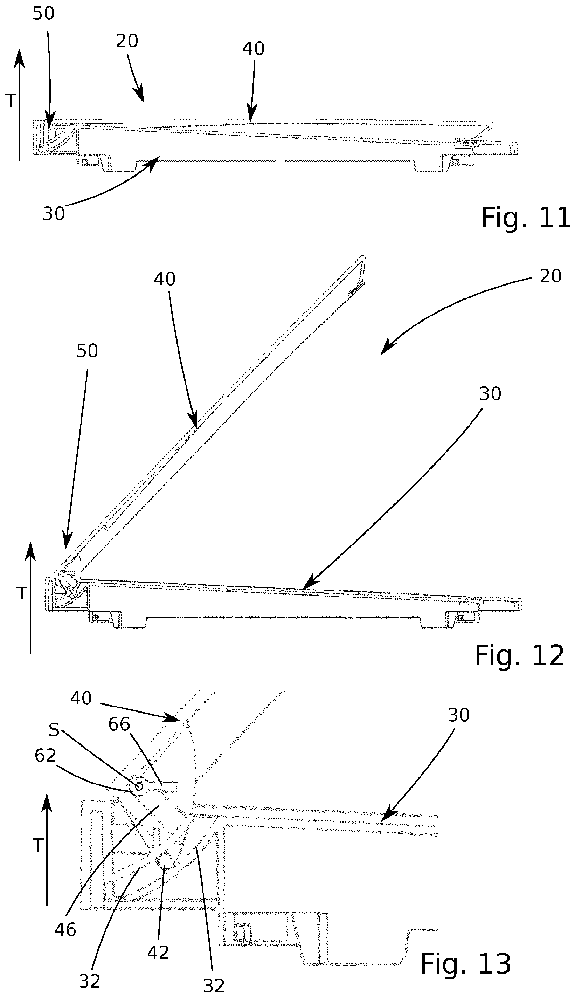

Die Schwenkachse S kann sich ferner im Wesentlichen parallel zum Türblatt 40 und/oder zur Schranköffnung erstrecken. Die Translationsachse T kann sich im Wesentlichen orthogonal zum Türblatt 40 in einer geschlossenen Stellung des Türblatts 40 und im Wesentlichen orthogonal zur Schranköffnung erstrecken. Eine geschlossene Stellung des Türblatts 40 ist beispielsweise in den Figuren 1 und 12 wiedergegeben.

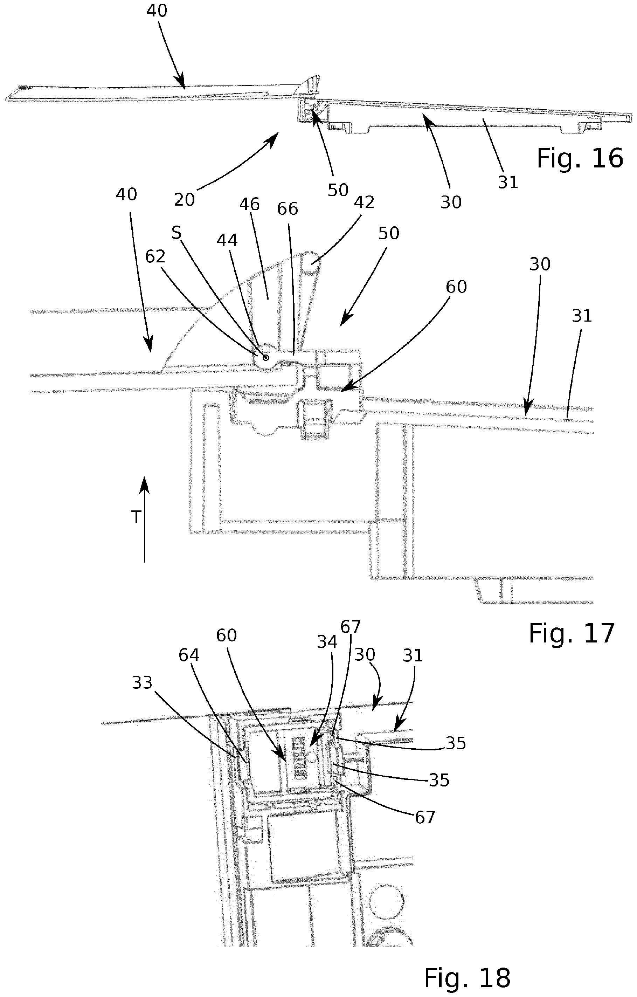

Das Scharnierelement 60 kann derart im Grundkörper 30 des Verteilerschranks 20 formschlüssig gehalten sein, dass lediglich die Translationsbewegung entlang der Translationsachse T des Scharnierelements 60 zugelassen wird. So wird beispielsweise ein Kippen des Scharnierelements 60 verhindert. Dabei wird beim Öffnen des Türblatts 40 das Scharnierelement 60 in einer Translationsbewegung, die parallel zur Translationsachse T verläuft, von einer Minimalposition zu einer Maximalposition des Scharnierelements 60. Die Minimalposition wird insbesondere in Figur 12 und die Maximalposition insbesondere in Figur 18 dargestellt.

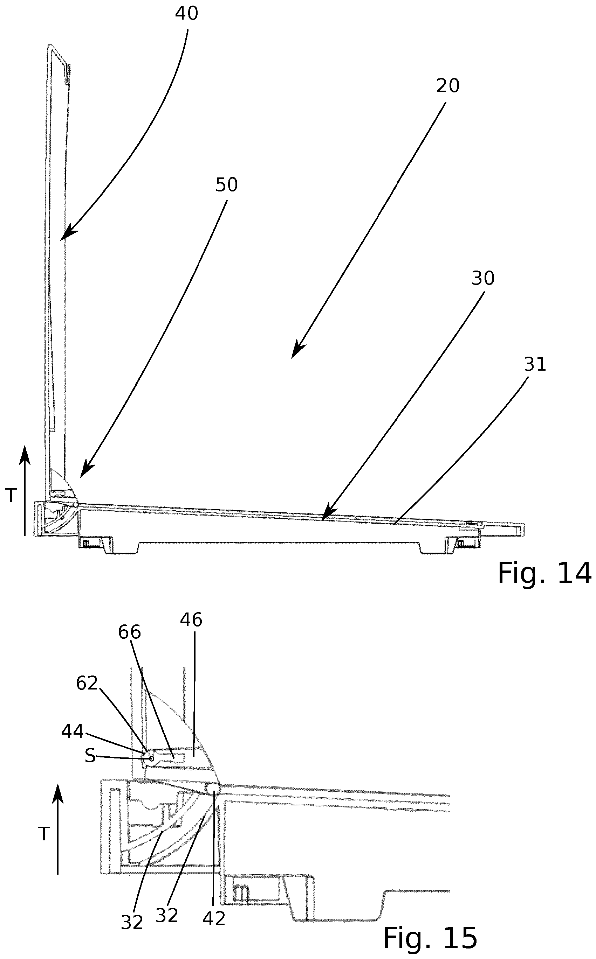

Das Türblatt 40 umfasst wenigstens einen Vorsprung 42 der sich im Wesentlichen parallel zur Schwenkachse S erstreckt. Der Grundkörper 30 umfasst wenigstens eine im Wesentlichen ellipsenbogenförmige Führungsfläche 32, entlang welcher der Vorsprung 42 geeignet ist, während eines Öffnungs- oder Schließungsvorgangs des Türblatts 40 zu gleiten. Gemäß dem vorliegenden Ausführungsbeispiel kann der Grundkörper 30 zwei parallel verlaufende ellipsenbogenförmige Führungsflächen 32 umfassen, die eine ellipsenbogenförmige Führungsnut bilden. Diese Ausgestaltung wird insbesondere aus den Figuren 14, 16 und 18 ersichtlich.

Gemäß dem Ausführungsbeispiel umfasst das Türblatt 40 für jedes Scharnierelement 60 zwei Vorsprünge 42, die vorzugsweise gegenüberliegend und/oder kollinear angeordnet sind.

Durch die ellipsenbogenförmige Führungsfläche 32 und/oder durch die ellipsenbogenförmige Führungsnut wird beim Öffnen des Verteilerschranks 20 durch Verschwenken des Türblatts 40 die relative Rotationsbewegung des Türblatts 40 gegenüber dem Scharnierelement 60 in die Translationsbewegung des Scharnierelements 60 überführt. So kann gemäß dem Ausführungsbeispiel für jedes Scharnierelement 60 einer der beiden Vorsprünge 42 durch eine Führungsfläche 32 geführt sein und der andere der beiden Vorsprünge 42 kann durch die durch zwei Führungsflächen 32 gebildete Führungsnut geführt sein.

Das Türblatt 40 wird durch die Führungsfläche 32 während der Bewegung von der geschlossenen Stellung des Türblatts 40 zur intermediären Stellung des Türblatts 40 geführt. Bei der Bewegung von der intermediären Stellung des Türblatts 40 zur offenen Stellung des Türblatts 40 befinden sich die Vorsprünge 42 außerhalb der Führungsnut und/oder sind nicht in Kontakt mit der Führungsfläche 32.

In der intermediären Stellung ist das Scharnierelement 60 gegenüber der Minimalstellung erhöht in der Aufnahme 34 angeordnet.

Durch die Translationsbewegung entlang der Translationsachse T des Scharnierelements 60 wird die Schwenkachse S ebenfalls entlang der Translationsachse T von einem Innenraum des Verteilerschranks 20 weg verschoben. Durch diese Verschiebung gelangt die Schwenkachse S von einem Innenraum des Verteilerschranks 20 in einen Außenbereich jenseits der Ebene, in welcher die Schranköffnung liegt. Somit wird in einer geöffneten Stellung des Türblatts 40 ein Öffnungswinkel des Türblatts 40 von bis zu ca. 190° ermöglicht, und zwar insbesondere ohne dass eine Berührung zwischen Türblatt 40 und Abdeckung 31 erfolgt. Eine solche geöffnete Stellung des Türblatts 40 ist in Figur 17 wiedergegeben.

Die Schwenkachse S kann durch wenigstens einen Stift 62 gebildet sein, wobei das Türblatt 40 eine Öffnung 44 umfasst, in welcher der Stift 62 aufgenommen ist. Der Stift kann auch als Angel des Türblatts 40 bezeichnet werden.

Das Scharnierelement 60 nach dem vorliegenden Ausführungsbeispiel kann zwei solcher Stifte 62 umfassen, die an gegenüberliegenden Flügeln 61 des Scharnierelements 60 angeordnet sind. Korrespondierend dazu weist das Türblatt 40 entsprechend zwei Öffnungen 44 auf. Zum Einführen der Stifte 62 in die Öffnungen 44, beispielsweise bei der Montage des Verteilerschranks, 20 können die Flügel 61 in einer Richtung parallel zur Schwenkachse S zusammengedrückt werden. Zu diesem Zwecke sind die Flügel 61 biegeelastisch am Scharnierelement 60 angeordnet und durch einen Zwischenraum 65 voneinander beabstandet.

Um ein versehentliches Hinausgleiten der Stifte 62 aus den Öffnungen 44 zu verhindern, können die beiden Flügel 61 durch ein Blockierungselement 63 gegen ein Zusammendrücken blockiert werden.

In dem Grundkörper 30 kann eine Aufnahme 34 gebildet sein, in welcher das Scharnierelement 60 entlang der Translationsachse T beweglich gehalten ist, wobei die Aufnahme 34 durch wenigstens eine sich im Wesentlichen parallel zur Translationsachse T erstreckende Seitenwand 36 begrenzt ist.

Die Aufnahme 34 gemäß dem Ausführungsbeispiel weist einen rechteckförmigen Querschnitt auf und ist durch vier solcher Seitenwände 36 gebildet. Zwei gegenüberliegende Seitenwände 36 der vier Seitenwände 36 sind orthogonal zur Schwenkachse S angeordnet. Die zwei übrigen ebenfalls gegenseitig gegenüberliegenden Seitenwände 36 sind parallel zur Schwenkachse S angeordnet.

Das Scharnierelement 60 kann einen Rastvorsprung 64 umfassen. Das Scharnierelement 60 kann ferner wenigstens einen Haltesteg 67, der vorzugsweise gegenüberliegend vom Rastvorsprung 64 am Scharnierelement 60 angeordnet ist, umfassen. Der Rastvorsprung 64 und der Haltesteg 67 halten das Scharnierelement 60 formschlüssig in der Aufnahme. So kann insbesondere der Rastvorsprung 64 mit einer Rastfläche 33 der Aufnahme 34 und der Haltesteg 67 mit einer Haltefläche 35 der Abdeckung 31 in der Maximalposition des Scharnierelements 60 in Berührung gelangen, um zu verhindern, dass das Scharnierelement 60 in Translationsrichtung T jenseits der Maximalposition aus der Aufnahme 34 gleitet. Diese Ausgestaltung ist insbesondere in Figur 18 wiedergegeben.

Ein solcher Rastvorsprung 64 insbesondere in Verbindung mit dem Haltesteg 67 erleichtert die Montage des Verteilerschranks 20 und insbesondere die Aufnahme des Scharnierelements 60 in der Aufnahme 34. Beim Einsetzen des Scharnierelements 60 in die Aufnahme 34 wird der Rastvorsprung 64 nach innen gedrückt. Sobald das Scharnierelement 60 in die Aufnahme 34 eingesetzt ist, kann der Rastvorsprung 64 zurückschnellen, wodurch das Scharnierelement 60 formschlüssig in der Aufnahme gehalten wird derart, dass eine translatorische Bewegung in Translationsrichtung T von der Minimalposition zur Maximalposition ermöglicht wird.

Das Scharnierelement 60 kann ferner zusätzlich seitliche Rastvorsprünge 64a umfassen, die in der Maximalposition des Scharnierelements 60 an korrespondierenden Rastflächen der Abdeckung 31 anliegen können.

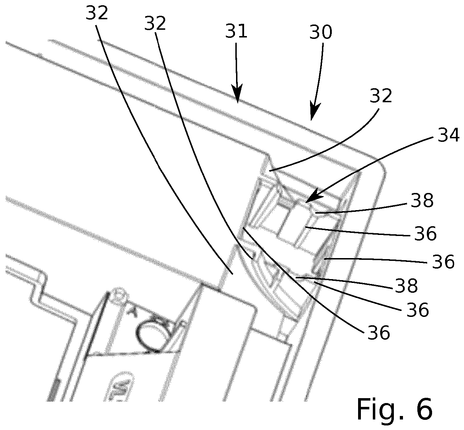

In der Seitenwand 36 kann wenigstens eine Ausnehmung 38 gebildet sein, in welcher der Stift 62 in einer geschlossenen Stellung des Türblatts 40 aufgenommen ist. Diese Ausgestaltung ist insbesondere in Figur 6 wiedergegeben. Diese Ausgestaltung ermöglicht ein sicheres Schließen des Verteilerschranks 20 mittels des Türblatts 40.

Das Scharnierelement 60 kann wenigstens einen Federabschnitt 66 und das Türblatt 40 kann wenigstens eine Nut 46 umfassen, wobei der Federabschnitt 66 in einer intermediären Stellung des Türblatts 40 in der Nut aufgenommen ist, um das Türblatt 40 in der intermediären Stellung zu halten. Diese Ausgestaltung ist insbesondere in Figur 16 dargestellt. Durch diese Ausgestaltung lässt sich das Türblatt 40 in einfacher Weise in der intermediären Stellung festsetzen.

Der Grundkörper 30 kann eine Abdeckung 31 umfassen, in welcher das Scharnierelement 60 entlang der Translationsachse T beweglich gehalten ist, wobei vorzugsweise die Aufnahme 34 in der Abdeckung 31 gebildet ist.

Der anmeldungsgemäße Verteilerschrank 20 erlaubt eine Öffnung der Tür in einem Winkel von ca. 190° gegenüber einer Ebene, in welcher die Schranköffnung angeordnet ist. Dabei kann der Scharnierkörper 50 an der Abdeckung 31 des Verteilerschranks 20 gebildet sein.

## Patentansprüche

1. Verteilerschrank mit einem Grundkörper (30), einem Türblatt (40) und einem Scharnierkörper (50), wobei der Verteilerschrank mittels des Türblatts (40) verschließbar ist, und wobei ein Innenraum des Verteilerschranks bei geöffnetem Türblatt (40) durch eine Schranköffnung zugänglich ist, wobei der Scharnierkörper (50) wenigstens ein Scharnierelement (60) umfasst, das wenigstens eine Schwenkachse (S) aufweist, die mit dem Türblatt (40) verbunden ist, wobei das Türblatt (40) um die Schwenkachse (S) herum schwenkbar ist, wobei das Türblatt (40) wenigstens einen Vorsprung (42) umfasst, der sich im Wesentlichen parallel zu der Schwenkachse (S) erstreckt, wobei der Grundkörper (30) wenigstens eine im Wesentlichen ellipsenbogenförmige Führungsfläche (32) umfasst, entlang welcher der Vorsprung (42) während eines Öffnungs- oder Schließungsvorgangs des Türblatts (40) gleitet,
**dadurch gekennzeichnet, dass** das wenigstens eine Scharnierelement (60) entlang einer sich im Wesentlichen orthogonal zu der Schranköffnung des Verteilerschranks erstreckenden Translationsachse (T) beweglich in dem Grundkörper (30) gehalten ist, wodurch eine relative Rotationsbewegung des Türblatts (40) in eine Translationsbewegung des mindestens einen Scharnierelements (60) überführt wird, welche eine Verschiebung der Schwenkachse (S) von dem Innenraum des Verteilerschranks (20) weg in einen Außenbereich jenseits einer Ebene bewirkt, in welcher die Schranköffnung liegt.

2. Verteilerschrank nach Anspruch 1, **dadurch gekennzeichnet, dass** sich die Schwenkachse (S) im Wesentlichen orthogonal zur Translationsachse (T) erstreckt.

3. Verteilerschrank nach einem der Ansprüche 1 oder 2, **dadurch gekennzeichnet, dass** die Schwenkachse (S) durch wenigstens einen Stift (62) gebildet ist, wobei das Türblatt (40) eine Öffnung (44) umfasst, in welcher der Stift (62) aufgenommen ist.

4. Verteilerschrank nach einem der Ansprüche 1 bis 3, **dadurch gekennzeichnet, dass** in dem Grundkörper (30) eine Aufnahme (34) gebildet ist, in welcher das Scharnierelement (60) entlang der Translationsachse (T) beweglich gehalten ist, wobei die Aufnahme (34) durch wenigstens eine sich im Wesentlichen parallel zur Translationsachse erstreckende Seitenwand (36) begrenzt ist.

5. Verteilerschrank nach Anspruch 4, **dadurch gekennzeichnet, dass** das Scharnierelement (60) einen Rastvorsprung (64) umfasst, der das Scharnierelement (60) formschlüssig in der Aufnahme hält.

6. Verteilerschrank nach einer Kombination der Ansprüche 4 und 5, **dadurch gekennzeichnet, dass** in der Seitenwand (36) wenigstens eine Ausnehmung (38) gebildet ist, in welcher der Stift (62) in einer geschlossenen Stellung des Türblatts (40) aufgenommen ist.

7. Verteilerschrank nach einem der Ansprüche 1 bis 6, **dadurch gekennzeichnet, dass** das Scharnierelement (60) wenigstens einen Federabschnitt (66) und das Türblatt (40) wenigstens eine Nut (46) umfasst, wobei der Federabschnitt (66) in einer intermediären Stellung des Türblatts (40) in der Nut aufgenommen ist, um das Türblatt (40) in der intermediären Stellung zu halten.

8. Verteilerschrank nach einem der Ansprüche 1 bis 7, **dadurch gekennzeichnet, dass** der Grundkörper (30) eine Abdeckung (31) umfasst, in welcher das Scharnierelement (60) entlang der Translationsachse (T) beweglich gehalten ist, wobei vorzugsweise die Aufnahme (34) in der Abdeckung (31) gebildet ist.

## Claims

1. Distribution cabinet having a main body (30), having a door leaf (40) and having a hinge body (50), wherein the distribution cabinet is closeable by means of the door leaf (40), and wherein an interior space of the distribution cabinet is accessible through a cabinet opening with the door leaf (40) open, wherein the hinge body (50) comprises at least one hinge element (60) which has at least one pivot axis (S) which is connected to the door leaf (40), wherein the door leaf (40) is pivotable about the pivot axis (S), wherein the door leaf (40) comprises at least one projection (42) which extends substantially parallel to the pivot axis (S), wherein the main body (30) comprises at least one substantially elliptical-arc-shaped guide surface (32) along which the projection (42) slides during an opening or closing operation of the door leaf (40), **characterized in that** the at least one hinge element (60) is held in the main body (30) so as to be movable along a translation axis (T) which extends substantially orthogonally to the cabinet opening of the distribution cabinet, whereby a relative rotational movement of the door leaf (40) is converted into a translational movement of the at least one hinge element (60), which causes the pivot axis (S) to be displaced away from the interior space of the distribution cabinet (20) into an outer region beyond a plane in which the cabinet opening lies.

2. Distribution cabinet according to Claim 1, **characterized in that** the pivot axis (S) extends substantially orthogonally to the translation axis (T).

3. Distribution cabinet according to either of Claims 1 and 2, **characterized in that** the pivot axis (S) is formed by at least one pin (62), wherein the door leaf (40) comprises an opening (44) in which the pin (62) is received.

4. Distribution cabinet according to one of Claims 1 to 3, **characterized in that**, in the main body (30), there is formed a receptacle (34) in which the hinge element (60) is held so as to be movable along the translation axis (T), wherein the receptacle (34) is delimited by at least one side wall (36) which extends substantially parallel to the translation axis.

5. Distribution cabinet according to Claim 4, **characterized in that** the hinge element (60) comprises a latching projection (64) which holds the hinge element (60) in the receptacle in a form-fitting manner.

6. Distribution cabinet according to a combination of Claims 4 and 5, **characterized in that**, in the side wall (36), there is formed at least one recess (38) in which the pin (62) is received in a closed position of the door leaf (40).

7. Distribution cabinet according to one of Claims 1 to 6, **characterized in that** that the hinge element (60) comprises at least one spring portion (66) and the door leaf (40) comprises at least one groove (46), wherein, in an intermediate position of the door leaf (40), the spring portion (66) is received in the groove in order for the door leaf (40) to be held in the intermediate position.

8. Distribution cabinet according to one of Claims 1 to 7, **characterized in that** the main body (30) comprises a cover (31) in which the hinge element (60) is held so as to be movable along the translation axis (T), wherein preferably the receptacle (34) is formed in the cover (31).

## Revendications

1. Armoire de distribution comprenant un corps de base (30), un vantail de porte (40) et un corps de charnière (50), l'armoire de distribution étant apte à être fermée au moyen du vantail de porte (40), et un espace intérieur de l'armoire de distribution étant accessible par une ouverture d'armoire lorsque le vantail de porte (40) est ouvert, le corps de charnière (50) comprenant au moins un élément de charnière (60) qui présente au moins un axe de pivotement (S) relié au vantail de porte (40), le vantail de porte (40) étant apte à pivoter autour de l'axe de pivotement (S), le vantail de porte (40) comprenant au moins une saillie (42) qui s'étend essentiellement parallèlement à l'axe de pivotement (S), le corps de base (30) comprenant au moins une surface de guidage (32) essentiellement en forme d'arc d'ellipse le long de laquelle la saillie (42) glisse pendant une opération d'ouverture ou de fermeture du vantail de porte (40), **caractérisée en ce que** ledit au moins un élément de charnière (60) est maintenu dans le corps de base (30) de manière mobile le long d'un axe de translation (T) s'étendant essentiellement de manière orthogonale à l'ouverture de l'armoire de distribution, ce qui permet de transformer un mouvement de rotation relatif du vantail de porte (40) en un mouvement de translation dudit au moins élément de charnière (60), ce qui provoque un déplacement de l'axe de pivotement (S) de l'intérieur de l'armoire de distribution (20) vers une zone extérieure au-delà d'un plan dans lequel se trouve l'ouverture de l'armoire.

2. Armoire de distribution selon la revendication 1, **caractérisée en ce que** l'axe de pivotement (S) s'étend sensiblement orthogonalement à l'axe de translation (T).

3. Armoire de distribution selon l'une des revendications 1 ou 2, **caractérisée en ce que** l'axe de pivotement (S) est formé par au moins une tige (62), le vantail de porte (40) comprenant une ouverture (44) dans laquelle est logée la tige (62).

4. Armoire de distribution selon l'une des revendications 1 à 3, **caractérisée en ce qu'**un logement (34) est formé dans le corps de base (30), dans lequel l'élément de charnière (60) est maintenu de manière mobile le long de l'axe de translation (T), le logement (34) étant délimité par au moins une paroi latérale (36) s'étendant sensiblement parallèlement à l'axe de translation.

5. Armoire de distribution selon la revendication 4, **caractérisée en ce que** l'élément de charnière (60) comprend une saillie d'encliquetage (64) qui maintient l'élément de charnière (60) par engagement positif dans le logement.

6. Armoire de distribution selon une combinaison des revendications 4 et 5, **caractérisée en ce qu'**au moins un évidement (38) est formé dans la paroi latérale (36), dans lequel la tige (62) est logée dans une position fermée du vantail de porte (40).

7. Armoire de distribution selon l'une des revendications 1 à 6, **caractérisée en ce que** l'élément de charnière (60) comprend au moins une partie élastique (66) et le vantail de porte (40) comprend au moins une rainure (46), la partie élastique (66) étant logée dans la rainure dans une position intermédiaire du vantail de porte (40) afin de maintenir le vantail de porte (40) dans la position intermédiaire.

8. Armoire de distribution selon l'une des revendications 1 à 7, **caractérisée en ce que** le corps de base (30) comprend un couvercle (31) dans lequel l'élément de charnière (60) est maintenu de manière mobile le long de l'axe de translation (T), le logement (34) étant de préférence formé dans le couvercle (31).
